(19) Europäisches Patentamt
European Patent Office
Office européen des brevets

(11) Veröffentlichungsnummer: **0 240 698 B1**

(12) **EUROPÄISCHE PATENTSCHRIFT**

(45) Veröffentlichungstag der Patentschrift: **02.01.92**

(51) Int. Cl.[5]: **C08G 18/40**, C08G 18/12, C09J 175/00, C09K 3/10

(21) Anmeldenummer: **87102803.1**

(22) Anmeldetag: **27.02.87**

(54) **Dicht- und Klebstoff.**

(30) Priorität: **05.03.86 DE 3607172**

(43) Veröffentlichungstag der Anmeldung:
**14.10.87 Patentblatt 87/42**

(45) Bekanntmachung des Hinweises auf die Patenterteilung:
**02.01.92 Patentblatt 92/01**

(84) Benannte Vertragsstaaten:
**AT BE CH DE ES FR GB IT LI NL SE**

(56) Entgegenhaltungen:
**US-A- 2 970 119**
**US-A- 4 020 216**

(73) Patentinhaber: **Teroson GmbH**
**Hans-Bunte-Strasse 4**
**W-6900 Heidelberg 1(DE)**

(72) Erfinder: **Duck, Edward, Prof. Dr.**
**Birkenweg 5**
**W-6901 Gaiberg(DE)**
Erfinder: **Scheffler, Ingolf, Dr.**
**Merianstrasse 14**
**W-6908 Wiesloch(DE)**

(74) Vertreter: **UEXKÜLL & STOLBERG Patentanwälte**
**Beselerstrasse 4**
**W-2000 Hamburg 52(DE)**

**EP 0 240 698 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind einkomponentige, unter Einfluß von Feuchtigkeit härtende Dicht- und Klebstoffe auf Basis von niedermolekularen telechelen Isocyanatpräpolymeren, deren Rückgrat eine unterschiedliche chemische Zusammensetzung hat. Die Dicht- und Klebstoffe sind vorzugsweise transparent bzw. transluzent.

In der Regel sind binäre oder ternäre Mischungen von Polymeren mit unterschiedlicher Zusammensetzung nicht verträglich bzw. haben sehr breite Mischungslücken, d.h. es sind nur sehr kleine Anteile der einen Komponente in der anderen Komponente ohne Phasentrennung löslich (siehe z.B. H.G. Elias, Makromoleküle, S. 211, Basel, Heidelberg, New York, 4. Auflage 1980). Auch die Zugabe von Lösungsmitteln oder Weichmachern zu unverträglichen Gemischen bringt im allgemeinen nur eine unwesentliche Verbesserung der Verträglichkeit.

Zur Synthese von Isocyanatgruppen enthaltenden Präpolymeren, die zur Herstellung von Kleb- und Dichtstoffen auf Polyurethan- Basis benutzt werden, werden sehr häufig Polyetherpolyole oder Polyesterpolyole verwendet. Gängige Polyetherpolyole sind di-, tri- oder höherfunktionelle Polypropylenglykole, Polyethylenglykole oder deren Copolymere. Häufig verwendete Polyesterpolyole werden durch Veresterung von aliphatischen oder aromatischen Dicarbonsäuren mit di- oder trifunktionellen Alkoholen hergestellt.

Für die Formulierung von Dichtstoffen, die bei Raumtemperatur härten, finden Polyurethane einerseits deshalb häufig Verwendung, weil sie eine hohe und leicht durch Katalysatoren steuerbare Härtungsgeschwindigkeit haben. Andererseits werden bei der Härtungsreaktion auch bei einkomponentigen Formulierungen nur sehr geringe Mengen flüchtiger Bestandteile freigesetzt, so daß die während der Aushärtung auftretende Schrumpfung sehr gering ist. Auf diese Weise lassen sich sehr elegant weichelastische Dichtstoffe herstellen; ein weiterer Vorteil ist ihre große Aufnahmefähigkeit für die sehr gebräuchlichen und daher preiswerten Phthalatweichmacher. Aus diesen Gründen lassen sich ökonomisch sehr vorteihafte Dichtstoffe formulieren.

Ein entscheidener Nachteil der Polyetherurethane ist ihre sehr hohe Photooxidationsempfindlichkeit, die ihre Anwendbarkeit im Freien unter Tageslicht sehr stark einschränkt. Dies gilt in ganz besonderem Maße für helle bzw. nicht pigmentierte Dichtstoffe. Letztere werden bei Freibewitterung bzw. deren labormäßiger Simulation sehr rasch photooxidativ abgebaut, so daß diese Dichtstoffe ihre Funktion nicht mehr erfüllen. Diese Abbauprozesse lassen sich durch Zufügen von Lichtschutzmitteln, Antioxidantien oder deren Kombination nur geringfügig verlangsamen, auch wenn diese in unüblich hohen Dosierungen verwendet werden. Aus diesem Grunde gelingt es nicht, technisch brauchbare, unpigmentierte (transparente oder transluzente) Polyurethan-Dichtstoffe auf der Basis von Polyethern herzustellen.

Polyurethanpolymere auf der Basis von Polyesterpolyolen besitzen zwar eine wesentlich bessere Resistenz gegen photooxidativen Abbau als Polyetherurethane, so daß diese auf den ersten Blick geeignet erscheinen. Polyesterpolyole, und damit auch die aus ihnen hergestellten Polyurethanpräpolymeren, haben jedoch bei vergleichbarem Molekulargewichtsbereich eine wesentlich höhere Viskosität als die entsprechenden Polyetherpolyole und die daraus hergestellten Polyurethanpräpolymeren. Um trotzdem in den für die Applikation der Dichtstoffe erforderlichen Viskositätsbereich zu gelangen, stehen zwei Auswege zur Verfügung:

Zum einen kann man zur Herstellung der Polyurethanpräpolymeren von Polyesterpolyolen sehr niedrigen Molekulargewichtes ausgehen. Damit jedoch die Viskosität des Polyurethanpräpolymeren ebenfalls niedrig bleibt, d.h. eine nennenswerte Molekulargewichtserhöhung bei der Herstellung des Präpolymeren nicht stattfindet, wird gewichtsprozentual eine sehr große Menge Di- oder Triisocyanat benötigt. Ein Dichtstoff, der aus einem solchen Präpolymer formuliert wird, enthält in seiner reaktiven Stufe noch einen hohen Prozentsatz reaktiver Isocyanatgruppen. Bei Formulierungen ohne latenten Härter, d.h. bei Formulierungen, deren Vernetzungsreaktion auf der partiellen Hydrolyse von Isocyanatgruppen zu Aminogruppen (Hofmann-Reaktion) und deren Umsetzung mit den verbliebenen Isocyanatgruppen beruht, werden erhebliche Mengen an Kohlendioxid abgespalten. In nicht pigmentierten Formulierungen sind jedoch keine Absorbentien für das Kohlendioxid wie z.B. Calciumoxid einsetzbar, so daß eine Unterdrückung der Blasen-und Schaumbildung unmöglich ist.

Bei der Mitverwendung von verkappten Aminen als latenten Härtern kann zwar die Blasenbildung unterdrückt werden, wegen des hohen Prozentsatzes an reaktiven Isocyanatgruppen wird jedoch eine entsprechend hohe Menge des latenten Härters benötigt. Durch die hohe Zahl der nach der Härtungsreaktion entstehenden Harnstoffgruppen wird der ausgehärtete Dichtstoff sehr hydrophil, was in den meisten Anwendungsfällen unerwünscht ist.

Eine zweite Möglichkeit zur Erzielung einer niedrigen Viskosität des Präpolymeren und damit des Dichtstoffes ist die Verdünnung mit großen Mengen Weichmacher oder Lösungsmittel. Da letzeres bei und

nach dem Aushärtungsprozeß aus dem Dichtstoff verdunstet, führt dies zu einer nicht annehmbaren Schrumpfung des Dichtstoffes nach der Applikation. Die Verwendung der wenig flüchtigen höheren Phthalat-Weichmacher, wie Di-2-ethylhexylphthalat, Dinonylphthalat, Diisodecylphthalat etc. ist in den für eine ausreichende Viskositätserniedrigung des reaktiven Polyestherurethan-Präpolymeren notwenigen Menge nicht möglich, da nach dem Aushärten ein Ausschwitzen des Weichmachers zu beobachten ist. Der Grund für dieses Phänomen ist die hohe Polarität des Polyesterrückgrats des Polymeren, die auf die Ester-Carbonylgruppen zurückzuführen ist. Die Verwendung von polaren Weichmachern, wie z.B. Dibutylphthalat ist wegen ihrer hohen Flüchtigkeit und der damit verbundenen Schrumpfung nicht möglich.

Eine Lösung dieses Problems wäre an sich die Verwendung von Gemischen von Polyetherpolyolen und Polyesterpolyolen zur Herstellung von Polyurethanpräpolymeren mit Polyether- und Polyesterrückgrat, um die Vorteile beider Komponenten miteinander zu vereinen. Dieser Weg kann jedoch für die Herstellung von einkomponentigen Dichtstoffen nicht beschritten werden, da die in Frage kommenden Polyesterpolyole mit den zur Präpolymerherstellung geeigneten Polypropylenglykolen nicht verträglich sind, auch nicht in Abmischung mit Weichmachern. Auch eine sehr feine Dispergierung der beiden Komponenten zeigt nach kurzer Lagerung Phasentrennung. Ein "Copolymer", das durch gemeinsame Umsetzung eines Polypropylenglykols und eines Polyesterpolyols mit einem Diisocyanat entsteht, zeigt bei Lagerung unter Feuchtigkeitsausschluß ebenfalls makroskopische Phasentrennung.

Die DE-C- 29 15 864 beschreibt einen feuchtigkeitshärtenden einkomponentigen Dichtstoff auf der Basis eines freie Isocyanatgruppen enthaltenden Umsetzungsproduktes aus einem Diisocyanat und einem Hydroxylgruppen enthaltenden Acrylsäureester-Copolymeren niedrigen Molekulargewichtes. Technisch hochwertige Dichtstoffe werden nach diesem Verfahren jedoch nur für pigmentierte Formulierungen erhalten, die außerdem nur einen niedrigen Anteil an Weichmacher, bezogen auf den Polymeranteil, enthalten dürfen.

Gemäß der älteren EP-A-205 846 werden mit hydroxyfunktionellen Methacrylatpräpolymeren niedrigen Molekulargewichts verträgliche Mischungen aus Polyetherpolyolen und einer Anzahl von Polyesterpolyolen erhalten. Als Polyetherpolyole werden vorzugsweise die dem Polyurethanfachmann geläufigen di-, tri- oder höherfunktionellen Polyalkohole verwendet, die durch Polymerisation von Propylenoxid oder durch Copolymerisation von Propylenoxid und Ethylenoxid entstehen. Die zur Herstellung von Polyurethanen handelsüblichen Polyetherpolyole im Molekulargewichtsbereich bis etwa 10.000 sind in jedem Verhältnis verträglich mit den beschriebenen hydroxyfunktionellen Acrylat- und Methacrylatpolymeren niedrigen Molekulargewichtes. Es ist also ohne weiteres möglich, durch Umsatz mit Diisocyanaten allein aus diesen beiden Komponenten homogene Präpolymermischungen herzustellen und diese zur Formulierung von Klebstoffen und Dichtstoffen zu benutzen.

Besonders vorteilhafte Gesamteigenschaften der Dichtstoffe werden jedoch überraschenderweise erhalten, wenn die Polymermischung zusätzlich eine geeignete Polyesterkomponente enthält. Erst mit dieser Dreierkomposition läßt sich ein weichelastisches nicht pigmentiertes Dichtstoffsystem herstellen, das auch genügend chemische Resistenz und Lichtbeständigkeit hat, um für Außenanwendungen brauchbar zu sein.

Aufgabe der Erfindung ist es, ein verträgliches Bindemittelsystem zu entwickeln, das die Herstellung von unpigmentierten, vorzugsweise transparenten oder transluzenten einkomponentigen Dichtstoffen ermöglicht. Dieser einkomponentige Dichtstoff soll dabei unter Ausschluß von Luftfeuchtigkeit lagerstabil sein und nach Zutritt von Luftfeuchtigkeit rasch zu einem weichelastischen Dichtungsmittel aushärten. Dieser Dichtstoff soll außerdem hinreichende Stabilität gegen photooxidativen Abbau besitzen, so daß er ohne Einschränkungen im Außenbereich eingesetzt werden kann.

Gegenstand der Erfindung ist ein einkomponentiger feuchtigkeitshärtender Dicht- und Klebstoff auf Basis von Gemischen miteinander verträglicher telecheler Isocyanat-Präpolymerer, die durch Reaktion von Di- und/oder Polyisocyanaten im stöchiometrischen Überschuß mit Polyesterpolyolen, Polyetherpolyolen und hydroxyfunktionellen (Meth)acrylatpräpolymeren erhältlich sind, und üblichen Weichmachern sowie gegebenenfalls Füllstoffen, Pigmenten, Alterungsschutzmitteln und Katalysatoren, welche dadurch gekennzeichnet ist, daß die Hydroxy(meth)acrylatpräpolymeren ein Molekulargewicht von etwa 1.000 bis 15.000 aufweisen, im wesentlichen $\alpha,\omega$-ständige Hydroxylgruppen bei einem Hydroxyequivalent von etwa 500 bis 5.000 enthalten und eine Funktionalität zwischen 2.0 und 3.0 haben, daß das Gewichtsverhältnis von Polyetherpolyolen zu Hydroxy(meth)acrylaten 3:1 bis 1:3 beträgt, und daß die Polyesterpolyole, die ein Molekulargewicht von 300 bis 15.000 haben, Verzweigungen aufweisen und
entweder der allgemeinen Formel I

$$HO-[\ A-O-\overset{\overset{O}{\|}}{C}-B-\overset{\overset{O}{\|}}{C}-O\ ]_m-A-OH \qquad I$$

entsprechen, in der m eine ganze Zahl von 1 bis 40 ist und A und B zweiwertige aliphatische, gegebenenfalls eine Estergruppe oder Sauerstoffatome in der Kette enthaltende $C_2$- bis $C_{20}$-Reste, cycloaliphatische $C_6$- bis $C_{20}$-Reste oder aromatische $C_6$- bis $C_{16}$-Reste bedeuten, wobei die Reste A und/oder B jeweils mindestens zwei aliphatische $C_1$- bis $C_5$-Seitengruppen aufweisen, oder A das Rückgrat des Rizinusöls bedeutet, und B eine C-C-Bindung oder eine Methylengruppe oder das Rückgrat einer dimeren oder trimeren Fettsäure darstellt,
oder ein Pfropfpolymerisat von (Meth)acrylaten oder Vinylverbindungen auf einem linearen Polyesterpolyol der Formel II

$$HO[E-O-\overset{\overset{O}{\|}}{C}-D-\overset{\overset{O}{\|}}{C}-O-]_n-E-OH \qquad II$$

sind, in der n eine ganze Zahl von 1 bis 40 ist und D und E jeweils geradkettige, gegebenenfalls Sauerstoffatome in der Kette enthaltende aliphatische $C_2$- bis $C_{20}$-Reste bedeuten oder D eine C-C-Bindung oder einen Methylenrest darstellt.

Gegebenenfalls können in dem Dicht- und Klebstoff ferner Füllstoffe, Pigmente, Thixotropierungsmittel, Alterungsschutzmittel und Katalysatoren sowie andere übliche Zusätze enthalten sein. Vorzugsweise werden die Massen jedoch als transparente bzw. transluzente Mischungen formuliert. Mischungen aus Polypropylenglykolen und niedermolekularen hydroxyfunktionellen (Meth)acrylatpräpolymeren gemäß der EP-A-205 846 sind in jedem Verhältnis miteinander mischbar. Überraschenderweise wurde jetzt gefunden, daß beim Zumischen der obigen verzweigten Polyesterpolyole in Gegenwart von Weichmachern ebenfalls verträgliche Polymermischungen entstehen.

Die geeigneten (Meth)acrylatpräpolymeren weisen ein Molekulargewicht von etwa 1000 bis 15.000 auf und enthalten im wesentlichen $\alpha,\omega$-ständige Hydroxylgruppen bei einem Hydroxyläquivalent von etwa 500 bis 5.000. Ihre Funktionalität liegt zwischen 2.0 und 3.0. Sie lassen sich nach dem Verfahren der EP-A-205 846 herstellen, auf welche ausdrücklich verwiesen wird.

Die Polyesterpolyole der Formeln I und II können nach an sich bekannten Verfahren aus den entsprechenden difunktionellen Alkoholen in dem erforderlichen stöchiometrischen Überschuß und Dicarbonsäuren synthetisiert werden. Ihr Molekulargewicht liegt bei 300 bis 15.000, vorzugsweise bei 500 bis 5.000.

Beispiele für geeignete verzweigte Alkohole sind 2,2,4-Trimethylhexandiol, 2,2,4-Trimethylpentandiol, 2,2-Dimethylpropandiol, Rizinusöl, Isomerengemische des 1,2-, 1,3- oder 1,4-Bis(hydroxymethyl)-cyclohexans, 3-Hydroxy-2,2-dimethylpropansäure-3-hydroxy-2,2-dimethylpropylester (als Beispiel für ein Diol mit einer Estergruppe in der Kette) und dimere oder polymere Fettalkohole, wie sie in der DE-A- 16 94 957, Seite 3 ff. beschrieben sind. Beispiele für unverzweigte Diole, welche mit verzweigten Dicarbonsäure umgesetzt werden, sind Ethylenglykol, 1,2- bzw. 1,3-Propandiol, 1,4-Butandiol, Hexandiol, Decandiol und Diethylenglykol.

Geeignete unverzweigte Dicarbonsäuren zur Umsetzung mit verzweigten Diolen sind Oxalsäure, Malonsäure, Glutarsäure, Adipinsäure, Sebazinsäure, Korksäure oder höhere Dicarbonsäuren. Für die Umsetzung mit unverzweigten Alkoholen eignen sich verzweigte Dicarbonsäuren wie Dimethylmalonsäure, Diethylmalonsäure, 3,3-Dimethylglutarsäure, 1,2-, 1,3- oder 1,4-Cyclohexandicarbonsäure und dimerisierte oder trimerisierte Fettsäure. Gegebenenfalls können auch verzweigte Dicarbonsäuren mit verzweigten Diolen zu dem Polyesterpolyol umgesetzt werden, wobei es dann ausreicht, wenn jede der Komponenten mindestens eine Seitengruppe aufweist. Auf ein Diol und eine Dicarbonsäure sollen insgesamt mindestens zwei Seitengruppen kommen.

Die Polyesterpolyole der Formel II enthalten als solche noch keine Verzweigung. Beispiele für solche einfachen Ausgangspolyole der Formel II sind Veresterungsprodukte aus Ethylenglykol, Diethylenglykol Propylenglykol, Butandiol oder Mischungen derselben mit Malonsäure, Glutarsäure, Adipinsäure, Sebazinsäure, Korksäure oder Mischungen aus diesen Säuren. Die Verzweigungen werden durch eine radikalische

Pfropfreaktion erhalten und verteilen sich demgemäß statistisch über die Polymerkette. In der Regel tragen die Verzweigungen keine funktionellen Gruppen, die mit Isocyanatgruppen reagieren können. Beispiele für aufzupfropfende Monomere sind Styrol, Isopren, Butadien, $C_1$-bis $C_{12}$-Alkylester der Acrylsäure oder Methacrylsäure und Mono- oder Di-$C_1$- bis $C_{12}$-Alkylester der Maleinsäure oder Itakonsäure.

Die Pfropfreaktion kann als getrennte Umsetzung durchgeführt werden, so daß man das gewünschte verzweigte Polyesterpolyol erhält, welches dann wie nachfolgend beschrieben durch Reaktion mit einem Isocyanat in ein Polyurethanpräpolymer überführt wird.

In einer bevorzugten Ausführungsform wird jedoch ein Hydroxygruppen enthaltende Acrylat- oder Methacrylatpolymer niedrigen Molekulargewichts in Gegenwart eines Polyesterpolyols der Formel II in einer "Eintopfreaktion" polymerisiert. Die Polymerisation der Acrylat- oder Methacrylatmonomeren kann dabei nach dem in der DE-A-35 18 708 beschriebenen Verfahren erfolgen. Niedermolekulare (Meth)-acrylatpolymere mit im wesentlichen $\alpha,\omega$-endständigen Hydroxylgruppen mit einem Hydroxylgruppenäquivalentgewicht von 500 bis 5.000 werden danach durch Polymerisieren von (Meth)acrylaten und gegebenenfalls copolymerisierbaren Monomeren in Gegenwart eines zur Übertragung von Hydroxylgruppen auf das Polymermolekül befähigten Initiators und von Reglern der allgemeinen Formel $HO-A-S_x-B-OH$, in der A und B jeweils einen zweiwertigen organischen Rest bedeuten und $X \geqq 2$ ist, erhalten. Nach dem aus der allgemeinen Literatur, z.B. aus der DE-C- 29 15 864 bekannten Verfahren verwendet man zur Steuerung des Molekulargewichts ein Hydroxylgruppen enthaltendes Mercaptan wie Mercaptoethanol als Regler und wenn notwendig zusätzlich ein Hydroxylgruppen enthaltendes Monomer wie 2-Hydroxyethyl(meth)acrylat.

Die nach diesem Eintopfverfahren hergestellten Mischungen von Polyesterpolyolen und hydroxyfunktionellen (Meth) acrylatpolymeren niederen Molekulargewichts sind viskose klare oder manchmal opake bzw. leicht trübe Flüssigkeiten. Eine Phasentrennung letzterer wurde nicht beobachtet. Durch Zusatz von handelsüblichen Weichmachern wie beispielsweise Phthalsäureestern in Mengen, wie sie für eine Dichtstofformulierung notwendig sind, werden klare, niedrig- bis mittelviskose farblose Flüssigkeiten erhalten, die mit den in der Polyurethanchemie gebräuchlichen Polyetherpolyolen in jedem Verhältnis verträglich sind. Diese ternären Polyolmischungen mit Weichmachern sind ihrerseits klare Flüssigkeiten und können in an sich bekannter Weise mit Di- oder Polyisocyanaten zu Isocyanatgruppen enthaltenden Polyurethanpräpolymeren umgesetzt werden.

Neben dieser "integralen" Herstellungsweise der isocyanatgruppenhaltigen Polyurethanpräpolymeren, bei der eine Mischung aller drei verschiedenen Polyolkomponenten mit dem Diisocyanat umgesetzt wird, kann jedoch auch jede Polyolkomponente einzeln mit dem Isocyanat umgesetzt werden. Auch die so erzeugten einzelnen Isocyanatgruppen enthaltenden Präpolymeren sind in Anwesenheit der für die Dichtstoffherstellung notwendigen Menge Weichmacher voll miteinander verträglich.

Die geeigneten Polyetherpolyole für die Polyolkomponente sind insbesondere Polyethylenoxid, Polypropylenoxid und deren Copolymere.

Zur Herstellung der telechele Isocyanatgruppen enthaltenden Präpolymeren kann im Prinzip jedes Di- oder Polyisocyanat Verwendung finden. Da die bevorzugten Anwendungen für diese Präpolymeren erfindungsgemäß nicht pigmentierte oder hell pigmentierte Dichtstoffe sind, werden vorzugsweise die lichtstabilen aliphatischen oder cycloaliphatischen Isocyanate eingesetzt. Typische Beispiele für geeignete Diisocyanate sind Hexamethylendiisocyanat (HDI), 2,2,4-Trimethylhexandiisocyanat,3-Isocyanatomethyl-3,5,5-trimethylcyclohexylisocyanat (IPDI), trans-1,4-Cyclohexandiisocyanat (CHDI), 1,3-Bis(isocyanatomethyl)-cyclohexan ($H_6XDI$), 4,4′-Dicyclohexylmethandiisocyanat ($H_{12}MDI$), meta-Tetramethylxyloldiisocyanat oder para-Tetramethylxyloldiisocyanat (m-TMXDI, p-TMXDI). Zur Herstellung pigmentierter Dichtstoffe kommen auch aromatische Verbindungen wie Diphenylmethandiisocyanat (MDI), Toluylendiisocyanat (TDI), Naphthalindiisocyanat, p-Phenylendiisocyanat und 1,3-Bis(isocyanatomethyl)-benzol in Betracht.

Die Umsetzung der einzelnen Hydroxylgruppen enthaltenden Polymeren oder der Hydroxylgruppen enthaltenden Polymermischung mit dem Isocyanat zum Polyurethanpräpolymeren kann entweder bei Raumtemperatur oder bei erhöhter Temperatur zwischen 50 °C und 100 °C in an sich bekannter Weise erfolgen, wobei zur Beschleunigung der Reaktion die bekannten Katalysatoren wie Zinn(II)octoat zugesetzt werden können. Weitere Beispiele findet man u.a. bei J.H. Saunders und K.C. Fritsch, Polyurethanes - Chemistry and Technology, Part I, S. 129 - 217, New York, 1962. Obwohl die Reaktion aus den oben erwähnten Gründen üblicherweise in Anwesenheit von Weichmacher durchgeführt wird, kann sie auch in Substanz erfolgen. Als Weichmacher können beispielsweise die Ester der Phthalsäure, Adipinsäure oder Sebazinsäure, aber auch Phophatester- oder Sulphonatweichmacher verwendet werden.

In der Regel werden pro Hydroxyläquivalent der Polyolkomponente 1.5 bis 2 Isocyanatäquivalente des Diisocyanates eingesetzt, und die Reaktion wird so lange fortgesetzt, bis alle Hydroxylgruppen abreagiert haben (gemessen durch die Abnahme der Isocyanatgruppen). Polyetherpolyol und Hydroxy(meth)-acrylatpräpolymer liegen in einem Gewichtsverhältnis von etwa 3:1 bis 1:3, vorzugsweise 2:1 bis 1:2 und

insbesondere 1:1 vor. Der Gehalt an Polyesterpolyol in der Polyolkomponente kann bei 2 bis 80, vorzugsweise etwa 20 - 40 Gew. % liegen.

Die feuchtigkeitshärtenden Kleb- und Dichtstoffe auf der Basis der erfindungsgemäß hergestellten Isocyanatgruppen enthaltenden verträglichen Präpolymermischungen enthalten neben üblichen Weichmachern gegebenenfalls geeignete Füllstoffe, Thixotropierungsmittel, Alterungsschutzmittel, Haftvermittler, Härtungskatalysatoren und Härter, z.B. latente Aminhärter.

Letztere können blockierte Di- oder Polyamine sein, z.B. die in DE-B- 21 16 882, DE-B- 21 25 247, DE-B- 25 21 841 und DE-B- 21 66 502 genannten Enamine, ferner die in DE-B-24 26 438 genannten Oxazolidine oder die in GB-A- 10 64 841 oder in DE-A- 33 06 373 erwähnten Aldimine oder Ketimine.

Für die erfindungsgemäß bevorzugten transparenten oder transluzenten Dichtstoffe können als Füllstoffe nur solche eingesetzt werden, die sehr feinteilig sind und/oder einen ähnlichen Brechungsindex haben wie die Präpolymermischung. Beispiele für geeignete Füllstoffe sind hochdisperse Kieselsäuren, sehr feinteilige Glaspulver oder Glasfasern, sehr feinteilige Polymethylmethacrylat-Pulver, sehr feinteilige Polystyrol-Pulver oder sehr feinteilige Pulver aus Copolymeren des Methylmethacrylats mit anderen Methacrylsäureestern, Acrylnitril und/oder Styrol. Auswahlkriterien sind hierbei die Kornfeinheit des Glas- oder Polymerpulvers und die Ähnlichkeit des Brechungsindex mit dem der Präpolymermischung. Bei weitgehend identischem Brechungsindex darf der Füllstoff eine mittlere Teilchengröße bis 400 $\mu$m aufweisen. Sonst sollte die mittlere Teilchengröße 40 bis 50 $\mu$m nicht übersteigen.

Besonders hervorzuheben ist bei den erfindungsgemäßen transparenten oder transluzenten Dichtstofformulierungen die gute Balance der technisch wichtigen Eigenschaften wie gute Transparenz, gute Witterungsbeständigkeit, insbesondere Beständigkeit gegen photooxidativen Abbau, niedriger Elastizitätsmodul, gute Rückstellfähigkeit nach Dehnung sowie die sehr geringe Geruchsbelästigung während des Aushärtens.

Gegenüber den im Außenbereich bisher vorzugsweise eingesetzten Dichtstoffen auf der Basis von Silikon-Oligomeren besitzen die erfindungsgemäßen Polymermischungen erhebliche Vorteile: die Bruchdehnung und die Weiterreißfestigkeit sind wesentlich höher; dies ist von entscheidendem Vorteil bei der Abdichtung von Fugen, die aufgrund thermischer Ausdehnung oder mechanischer Bewegung ihre lichte Weite stark verändern. Die Wasserdampfdurchlässigkeit der erfindungsgemäßen Dichtstoffe beträgt nur ein Drittel derjenigen von Dichtstoffen auf der Basis von Silikon-Oligomeren; dies kann vorteilhaft bei Dichtungsproblemen genutzt werden, bei denen es um eine gute Wasserdampfsperre geht. Ein weiterer Vorteil ist die Möglichkeit, als Weichmacher die ökonomisch sehr günstigen Phthalatweichmacher einsetzen zu können. Bei den Silikondichtstoffen, besonders bei den nicht pigmentierten Typen, ist dies nur in sehr eingeschränktem Maße möglich, hier ist man in der Hauptsache auf die sehr teuren polymeren Weichmacher auf der Basis niedermolekularer Silikonöle angewiesen. Insgesamt werden damit auch erhebliche Kostenersparnisse erzielt.

Die nachfolgenden typischen Beispiele zeigen die technischen Vorteile der erfindungsgemäßen Polymermischungen und der daraus formulierten Dichtstoffe, sie umfassen jedoch nicht die volle Anwendungsbreite der erfindungsgemäßen Dichtstoffe oder Klebstoffe. Diese kann der Fachmann sich jedoch aus den oben gemachten Angaben leicht herleiten.

Die in den Beispielen genannten Teile und Prozente sind Gewichtsteile und Gewichtsprozente. Die angegebenen Hydroxyläquivalentgewichte (E(OH)) wurden durch Acetylierung mit Acetanhydrid und Titration mit Kaliumhydroxid bestimmt, die Isocyanatäquivalentgewichte (E(NCO)) wurden nach der Dibutylamin-Methode bestimmt. Die genannten mittleren Molekulargewichte (M(GPC)) wurden mittels Gelpermeations-Chromatographie bestimmt und stellen nicht korrigierte Peak-Werte (gegen Polystyrol-Standards geeicht) dar. Die Viskositäten wurden bei 20°C mit einem Brookfield-Viskosimeter bestimmt.

Beispiel 1 (Herstellung von Polyesterpolyolen der Formel I)

Die folgenden Polyesterpolyole wurden nach herkömmlichen Veresterungsverfahren synthetisiert. Dazu wurden die jeweiligen Alkohol- und Carbonsäurenkomponenten in Xylol gemischt, mit einem sauren Ionenaustauscher versetzt und unter Rückfluß zum Sieden erhitzt. Das entstehende Reaktionswasser wurde dabei azeotrop entfernt, nach beendeter Reaktion wurde vom Ionenaustauscherharz abfiltriert und das Lösungsmittel und gegebenenfalls die im Überschuß eingesetzte Alkoholkomponente wurden im Vakuum abdestilliert.

| | Kondensationsprodukt aus |
|---|---|
| Polyester 1, MW 2500 | Adipinsäure mit Diethylenglykol (Vergleich) |
| Polyester 2, MW 2000 | Adipinsäure mit Ethylenglykol, Diethylenglykol und 1,4-Butandiol (Vergleich) |
| Polyester 3, MW 2000 | dimerisierte Fettsäure mit Ethylenglykol |
| Polyester 4, MW 1000 | Adipinsäure mit 2,2-Dimethylpropandiol-(1,3) |
| Polyester 5, MW 2000 | wie Polyester 4 |
| Polyester 6, MW 2000 | Dimethylglutarsäure mit Ethylenglykol |
| Polyester 7, MW 2000 | Adipinsäure mit dimerem Fettalkohol |
| Polyester 8, MW 1500 | Diethylmalonsäure mit Ethylenglykol |
| Polyester 9, MW 2000 | Adipinsäure mit 1,4-Bis(hydroxymethyl)cyclohexan |
| Polyester 10,MW 1200 | Ricinolsäure mit Glycerin und 1,4-Butandiol |
| Polyester 11,MW 1800 | Adipinsäure mit 3-Hydroxy-2,2-dimethylpropansäure-3-hydroxy-2,2-dimethylpropylester |
| Polyester 12,MW 1900 | Adipinsäure, Glutarsäure und Bernsteinsäure mit Diethylenglykol (Vergleich) |

Beispiele 2 bis 4 (Pfropfung von Polyesterpolyolen der Formel II)

Die folgenden Polyester wurden durch radikalische Pfropfreaktion mit Seitenketten versehen, wobei gleichzeitig in situ das hydroxyfunktionelle Methacrylatpolymer niedrigen Molgewichts erzeugt wurde.

(2) In einem Vierhalskolben mit Rührer, Rückflußkühler und drei Tropftrichtern wurden 115 Teile des Polyesters 1 auf 80 °C erwärmt, die Apparatur mehrfach evakuiert und mit Stickstoff gespült. Danach lief innerhalb von 10 min die Hälfte einer Lösung von 10,2 Teilen Hydroxyethylmethacrylat in 100 Teilen n-Butylmethacrylat (Monomer) in den Reaktionskolben. Anschließend wurden innerhalb von 70 Minuten das restliche Monomer, eine Lösung von 0,42 Teilen Azobisisobutyronitril in 46 Teilen Essigester und 4,88 Teile Mercaptoethanol gleichzeitig aus den Tropftrichtern zudosiert. Anschließend wurde die Temperatur langsam auf 100 °C gesteigert und noch 5 Stunden bei dieser Temperatur gerührt. Nach dem Abkühlen wurden 57,65 Teile Dioctylphthalat (DOP) zugefügt und der Essigester wurde im Vakuum abdestilliert. Die leicht opake Polymerlösung enthielt nun 20% DOP.

(3) und (4) Die Polyester 2 und 12 wurden in analoger Weise umgesetzt.

Vergleichsbeispiele 5 bis 8

(5) In einem Vierhalskolben mit Rückflußkühler, Rührer, Innenthermometer und zwei Zulaufgefäßen wurden 150 Teile Isopropanol, 20 Teile Wasser, 0,004 Teile Eisen(II)-sulfat, 0,04 Teile Ethylendiamintetraessigsäure und 0,6 Teile 70%ige Perchlorsäure vorgelegt, von gelöstem Sauerstoff befreit und in einem Stickstoffstrom auf 80 °C aufgeheizt. Von 300 Teilen n-Butylmethacrylat wurden jetzt 5% auf einmal in den Reaktionskolben gegeben, anschließend tropften 55 Teile 60%ige wässrige Wasserstoffperoxidlösung innerhalb von 10 min in das Reaktionsgefäß. Nach dem Abklingen der exothermen Reaktion wurden das restliche Monomer sowie eine Lösung von 39 Teilen Bis(hydroxyethyl)disulfid in 50 Teilen Isopropanol innerhalb von 5 Stunden zudosiert. Danach wurde noch 2 Stunden lang bei 75 °C gerührt. Nach dem Abkühlen wurde die Polymerlösung mit 500 ml Toluol versetzt und die sich abscheidende wässrige Phase abgetrennt. Die organische Phase wurde noch viermal mit gesättigter wässriger Natriumbisulfit-Lösung und anschließend mit Wasser gewaschen. Die leicht trübe Polymerlösung wird klar filtriert und das Lösungsmittel im Vakuum abdestilliert. Die Ausbeute an hochviskosem, klarem, farblosem Polymer war fast quantitativ. E(OH) = 1.844 g/mol, M(GPC) = 3.760.

25 Teile dieses hydroxyfunktionellen Methacrylats, 25 Teile eines trifunktionellen Propylenoxid-Ethylenoxid-Copolymeren von MW 4900 (Polyetherpolyol) und 25 Teile DOP wurden homogen vermischt und entgast, es entstand eine klare, farblose Lösung, die jedoch noch kein Polyesterpolyol enthielt.

(6) 25 Teile des Polyesters 1, 25 Teile des obigen Polyetherpolyols und 25 Teile DOP wurden vermischt und entgast, die stark getrübte Lösung zeigte nach 3 Tagen Phasentrennung.

(7) und (8) Anstelle des Polyesters 1 wurden die Polyester 2 bzw. 12 verwendet. Es wurden stark trübe Lösungen erhalten, die nach 3 Tagen Phasentrennung zeigten.

Beispiele 9 bis 17

25 Teile der Polyesterpolyole 3 bis 11 wurden jeweils mit 25 Teilen des hydroxyfunktionellen Methacrylates des Beispiels 5, 25 Teilen des Polyetherpolyols und 25 Teilen DOP vermischt und entgast. In allen Fällen wurden klare Lösungen erhalten.

Beispiele 18 bis 20

60 Teile der Methacrylat/Polyestermischungen der Beispiele 2 bis 4 wurden jeweils mit 24 Teilen Polyetherpolyol und 20 Teilen DOP vermischt und entgast. Es wurden klare Lösungen erhalten.

Beispiel 21

In einem Dreihalskolben mit Rückflußkühler, Innenthermometer und Rührer wurden 1730 Teile eines trifunktionellen copolymeren Polyetherpolyols aus Propylenoxid und Ethylenoxid mit einem E(OH) von 1650 g/mol unter Stickstoff auf 50 °C erwärmt. Anschließend wurden 240 Teile IPDI unter Rühren hinzugefügt, danach 0.075 Teile Zinn(II)octoat (Katalysator) in 0,375 Teilen trockenen Toluols hinzugefügt und die Mischung auf 80 °C erwärmt. Nach 9 Stunden Reaktionszeit war vollständiger Umsatz erzielt, das Isocyanatgruppen enthaltende Präpolymer wurde auf Raumtemperatur abgekühlt. E(NCO) = 1910 g/mol, Viskosität: 37.000 mPa.s.

Beispiel 22

499 Teile des Polyesters 4 (E(OH) = 518 g/mol) und 216,2 Teile IPDI wurden analog zu Beispiel 21 umgesetzt. Am Ende der Reaktion beträgt das E(NCO) 785 g/mol, Viskosität 2 350 000 mPa.s.

Beispiel 23

1033 Teile des Polyesters 2 (E(OH) = 1000 g/mol) und 212 Teile IPDI wurden analog Beispiel 21 umgesetzt. Am Ende der Reaktion mußten 140 Teile Xylol zur Viskositätserniedrigung zugefügt werden, das E(NCO) beträgt dann 1450 g/mol, Viskosität: 40.000 mPa.s.

Beispiel 24

Es wurde ein isocyanatgruppenhaltiges Butylmethacrylatpräpolymer aus dem Methacrylatpräpolymer des Beispiels 5 und IPDI hergestellt. Das E(NCO) beträgt 2286 g/mol, die Viskosität 562.000 mPa.s.

Beispiel 25

Es wurde eine "integrale" Präpolymermischung bestehend aus 532,8 Teilen hydroxyfunktionellen Butylmethacrylats mit einem E(OH) von 821 g/mol analog Beispiel 5, 796,4 Teilen eines trifunktionellen Polypropylenoxids mit einem E(OH) von 1650 g/mol und 642,4 Teilen des Polyesterpolyols 4, 621,9 Teilen DOP, 483 Teilen IPDI und 0,13 Teilen Zinn(II)octoat analog zu Beispiel 21 synthetisiert. Das E(NCO) ist 1840 g/mol, die Viskosität 115.000 mPa.s.

Beispiel 26

Analog zu Beispiel 21 werden 1250 Teile des gepfropften Polyesterpolyols des Beispiels 2 mit 222 Teilen IPDI umgesetzt. Nach 9 Stunden Reaktionszeit war vollständiger Umsatz erzielt. E(NCO) = 1560 g/mol. Viskosität: 95.000 mPa.s.

Vergleichsbeispiel 27

330 Teile eines hydroxyfunktionellen Butylacrylats analog Beispiel 1 der DE-C- 29 15 864 (E(OH)1996 g/mol) und 27,5 Teile eines Isomerengemisches aus Diisocyanatotoluol (TDI) wurden ähnlich wie in Beispiel 21 beschrieben umgesetzt, E(NCO) = 2712 g/mol, Viskosität: 427.000 mPa.s.

Vergleichsbeispiele 28 bis 31 und Beispiele 32 bis 34

In einem Planetenmischer wurden die in Tabelle 1 aufgeführten Mischungen hergestellt. Das Verhältnis

DOP zu Polymer der jeweiligen Formulierung wurde für ihre Anwendung als Dichtstoff optimiert. Der Anteil an Oxazolidinhärter gemäß DE-B- 24 26 438 wurde den jeweiligen stöchiometrischen Erfordernissen angepaßt, der Anteil an AEROSIL und Alterungsschutzmittel wurde gleichgehalten. Die einzelnen Zusammensetzungen und deren Eigenschaften finden sich in der Tabelle 1.

Tabelle 1

| | Beispiel 28 | 29 | 30 | 31 | 32 | 33 | 34 |
|---|---|---|---|---|---|---|---|
| Präpolymer aus Beispiel 21 | 64,0 | - | - | - | 13,4 | - | 13,0 |
| 22 | - | - | - | - | 13,4 | - | - |
| 23 | - | 50,0 | - | - | - | - | - |
| 24 | - | - | - | - | 13,4 | - | - |
| 25 | - | - | - | - | - | 40,2 | - |
| 26 | - | - | - | - | - | - | 27,2 |
| 27 | - | - | 40,7 | 44,5 | - | - | - |
| Oxazolidin[1]) | 6,0 | 7,0 | 3,8 | - | 4,4 | 4,4 | 4.4 |
| DOP | 19,5 | 32,5 | 45,0 | 45,0 | 44,9 | 44,9 | 44.9 |
| Alterungsschutzmittel[2]) | 1,0 | 1,0 | 1,0 | 1,0 | 1,0 | 1,0 | 1.0 |
| AEROSIL 200[3]) | 9,5 | 9,5 | 9,5 | 9,5 | 9,5 | 9,5 | 9.5 |
| Zugfestigkeit gem. DIN 53504 | | | | | | | |
| 100% Modul (N/cm²) | 46 | - | - | - | 38 | 41 | 40 |
| Zugfestigkeit (N/cm²) | 85 | - | - | - | 179 | 206 | 195 |
| Bruchdehnung % | 216 | - | - | - | 450 | 380 | 395 |
| Bemerkungen | | WM-Ausschwitzung | nicht lagerstabil | starke Blasenbildung | | | |
| Zugfestigkeit nach 1000 Stdn QUV Alterung gem. ASTM G 53-77 | | | | | | | |
| 100% Modul (N/cm²) | - | - | - | - | 32 | 39 | 38 |
| Zugfestigkeit (N/cm²) | - | - | - | - | 114 | 127 | 160 |
| Bruchdehnung (%) | - | - | - | - | 383 | 325 | 370 |

1.) Bisoxazolidin gemäß DE-B- 24 26 438

2.) Gemisch kommerzieller Alterungsschutzmittel der Fa. Ciba Geigy

3.) Pyrogene Kieselsäure der Fa. Degussa

Die Zugfestigkeit des Beispiels Nr. 28 nach UV-Alterung konnte nicht bestimmt werden, da das Material vollständig depolymerisiert war (schmierige hochviskose Masse). Beispiel 29 konnte nicht ausgewertet werden, da eine starke Weichmacherausschwitzung beobachtet wurde, Beispiel Nr. 30 zeigte völlig inakzeptable Lagerstabilität und Beispiel Nr. 31 war nach Aushärtung vollständig mit Blasen durchsetzt. Dagegen lieferten die erfindungsgemäßen Zusammensetzungen der Beispiele 32 bis 34 ausgezeichnete Ergebnisse.

Beispiel 35

Glasplatten 50x50x5 mm wurden einseitig mit einer silanhaltigen Primerlösung bestrichen, danach wurde mit Hilfe von Abstandshaltern ein Hohlraum von 10x10x50 mm zwischen den Glasplatten mit Dichtstoff gefüllt und dieser im Normklima 23°C/55% RLF 3 Wochen lang ausgehärtet. Zum Vergleich wurde ein handelsüblicher aminhärtender transparenter Silikon-Dichtstoff in gleicher Weise ausgehärtet. Nach einigen Tagen wurden die Abstandshalter entfernt. Der Verbund Glasplatten/-Dichtstoff wurde danach einem Zugversuch unterworfen, dessen Ergebnisse sich in Tabelle 2 finden.

Tabelle 2

| Dichtstoff | Nr. 35 | Silikon |
|---|---|---|
| 100% Modul ($N/cm^2$) | 19 | 34 |
| Zugfestigkeit ($N/cm^2$) | 50 | 37 |
| Bruchdehnung (%) | 335 | 128 |
| Art des Bruchs | kohäsiv | kohäsiv |

Der erfindungsgemäße Dichtstoff zeigt gegenüber dem handelsüblichen Silikon-Dichtstoff somit einen niedrigeren 100% Modul, eine höhere Zugfestigkeit und eine höhere Bruchdehnung.

**Patentansprüche**

1. Einkomponentiger feuchtigkeitshärtender Dicht- und Klebstoff auf Basis von Gemischen miteinander vertraglicher telecheler Isocyanat-Präpolymerer, die durch Reaktion von Di- und/oder Polyisocyanaten im stöchiometrischen Überschuß mit Polyesterpolyolen, Polyetherpolyolen und hydroxyfunktionellen (Meth)acrylatpräpolymeren erhältlich sind, und üblichen Weichmachern sowie gegebenenfalls Füllstoffen, Pigmenten, Alterungsschutzmitteln und Katalysatoren, dadurch gekennzeichnet, daß die Hydroxy(meth)acrylatpräpolymeren ein Molekulargewicht von etwa 1.000 bis 15.000 aufweisen, im wesentlichen $\alpha,\omega$-ständige Hydroxylgruppen bei einem Hydroxyequivalent von etwa 500 bis 5.000 enthalten und eine Funktionalität zwischen 2.0 und 3.0 haben, daß das Gewichtsverhältnis von Polyetherpolyolen zu Hydroxy(meth)acrylaten 3:1 bis 1:3 beträgt, und daß die Polyesterpolyole, die ein Molekulargewicht von 300 bis 15.000 haben, Verzweigungen aufweisen und

entweder der allgemeinen Formel I

$$HO-[A-O-\overset{\overset{O}{\|}}{C}-B-\overset{\overset{O}{\|}}{C}-O]_m-A-OH \qquad I$$

entsprechen, in der m eine ganze Zahl von 1 bis 40 ist und A und B zweiwertige aliphatische, gegebenenfalls eine Estergruppe oder Sauerstoffatome in der Kette enthaltende $C_2$-bis $C_{20}$-Reste,

cycloaliphatische $C_6$- bis $C_{20}$-Reste oder aromatische $C_6$- bis $C_{16}$-Reste bedeuten, wobei die Reste A und/oder B jeweils mindestens zwei aliphatische $C_1$- bis $C_5$-Seitengruppen aufweisen, oder A das Rückgrat des Rizinusöls bedeutet, und B eine C-C-Bindung oder eine Methylengruppe oder das Rückgrat einer dimeren oder trimeren Fettsäure darstellt,
oder ein Pfropfpolymerisat von (Meth)acrylaten oder Vinylverbindungen auf einem linearen Polyesterpolyol der Formel II

$$HO[E- O - \overset{\overset{O}{\|}}{C} - D - \overset{\overset{O}{\|}}{C} - O- ]_n-E-OH \qquad II$$

sind, in der n eine ganze Zahl von 1 bis 40 ist und D und E jeweils geradkettige, gegebenenfalls Sauerstoffatome in der Kette enthaltende aliphatische $C_2$- bis $C_{20}$-Reste bedeuten oder D eine C-C-Bindung oder einen Methylenrest darstellt.

2. Dicht- und Klebstoff nach Anspruch 1, dadurch gekennzeichnet, daß die Isocyanatpräpolymeren jeweils getrennt durch Umsetzung des Polyesterpolyols, des Polyetherpolyols und des hydroxyfunktionellen (Meth)acrylatpräpolymeren mit Di-und/oder Polyisocyanat hergestellt und dann miteinander gemischt sind.

3. Dicht- und Klebstoff nach Anspruch 1, dadurch gekennzeichnet, daß die Isocyanatpräpolymeren durch Umsetzung eines Polyol-Gemisches aus Polyesterpolyol, Polyetherpolyol und hydroxyfunktionellem (Meth)acrylatpräpolymer mit überschüssigem Di- und/oder Polyisocyanat hergestellt sind.

4. Dicht- und Klebstoff nach einem der Ansprüche 1 bis 3, dadurch gekennzeichnet, daß die hydroxyfunktionellen (Meth)acrylatpräpolymeren in Gegenwart eines Polyesterpolyols der Formel II unter gleichzeitiger Aufpfropfung der Seitengruppen auf das Polyesterpolyol hergestellt sind.

5. Dicht- und Klebstoff nach einem der Ansprüche 1 bis 4, dadurch gekennzeichnet, daß das Polyesterpolyol ein Molekulargewicht von 500 bis 5.000 aufweist.

6. Dicht- und Klebstoff nach einem ader Ansprüche 1 bis 5, dadurch gekennzeichnet, daß der Anteil an telechelen Isocyanatpräpolymeren auf Basis des verzweigten Polyesterpolyols bezogen auf die Gesamtmischung an Isocyanatpräpolymeren 2 bis 80 Gew.% beträgt.

7. Dicht- und Klebstoff nach Anspruch 3, dadurch gekennzeichnet, daß der Anteil an verzweigtem Polyesterpolyol in der Polyolkomponente 2 bis 80 Gew.% beträgt.

## Claims

1. One-component, moisture-curing sealant/adhesive based on mixtures of mutually compatible telechelic isocyanate prepolymers which are obtainable by reacting diisocyanates and/or polyisocyanates in stoichiometric excess with polyester-polyols, polyether-polyols and hydroxyl-functional(meth)acrylate prepolymers, and conventional plasticisers and, if desired, fillers, pigments, anti-ageing agents and catalysts, characterised in that the hydroxy(meth)acrylate prepolymers have a molecular weight of from about 1,000 to 15,000, contain essentially hydroxyl groups in the $\alpha,\omega$-position in a hydroxyl equivalent of from about 500 to 5,000, and have a functionality of between 2.0 and 3.0, in that the weight ratio between the polyether-polyols and the hydroxy(meth)acrylates is from 3:1 to 1:3, and in that the polyester-polyols, which have a molecular weight of from 300 to 15,000, have branches and conform either to the formula I

$$HO-[ A - O - \overset{\overset{O}{\|}}{C} - B - \overset{\overset{O}{\|}}{C} - O ]_m - A - OH \qquad I$$

in which m is an integer from 1 to 40, and A and B denote divalent, aliphatic $C_2$ to $C_{20}$ radicals, optionally containing an ester group or oxygen atoms in the chain, cycloaliphatic $C_6$ to $C_{20}$ radicals or aromatic $C_8$ to $C_{15}$ radicals, the radicals A and/or B each containing at least two aliphatic $C_1$ to $C_5$ side groups, or A denoting the backbone of castor oil, and B representing a C-C bond or a methylene group or the backbone of a dimeric or trimeric fatty acid,
or are a graft polymer of (meth)acrylates or vinyl compounds on a linear polyester-polyol of the formula II

$$HO[E-O-\overset{O}{\overset{\|}{C}}-D-\overset{O}{\overset{\|}{C}}-O-]_n-E-OH \qquad II$$

in which n is an integer from 1 to 40, and D and E each denote straight-chain, aliphatic $C_2$ to $C_{20}$ radicals, optionally containing oxygen atoms in the chain, or D is a C-C bond or a methylene radical.

2. Sealant/adhesive according to Claim 1, characterised in that the isocyanate prepolymers are each prepared separately by reacting the polyester-polyol, the polyether-polyol and the hydroxyl-functional (meth)acrylate prepolymer with diisocyanate and/or polyisocyanate and are then mixed with one another.

3. Sealant/adhesive according to Claim 1, characterised in that the isocyanate prepolymers are prepared by reacting a polyol mixture comprising polyester-polyol, polyether-polyol and hydroxyl-functional (meth)acrylate prepolymer with excess diisocyanate and/or polyisocyanate.

4. Sealant/adhesive according to one of Claims 1 to 3, characterised in that the hydroxyl-functional (meth)-acrylate prepolymers are prepared in the presence of a polyester-polyol of the formula II with simultaneous grafting of the side groups onto the polyester-polyol.

5. Sealant/adhesive according to one of Claims 1 to 4, characterised in that the polyester-polyol has a molecular weight of from 500 to 5,000.

6. Sealant/adhesive according to one of Claims 1 to 5, characterised in that the proportion of telechelic isocyanate prepolymers based on the branched polyester-polyol is from 2 to 80% by weight, based on the total mixture of isocyanate prepolymers.

7. Sealant/adhesive according to Claim 3, characterised in that the proportion of branched polyesterpolyol in the polyol component is from 2 to 80% by weight.

**Revendications**

1. Agent d'étanchéité et adhésif à un composant, durcissant à l'humidité, à base de mélanges de prépolymères d'isocyanates chélatés mutuellement compatibles que l'on peut obtenir par réaction de di- et/ou polyisocyanates en excès stoechiométrique avec des polyester polyols, des polyéther polyols et des prépolymères de (méth)acrylates hydroxyfonctionnels, et de plastifiants traditionnels ainsi que le cas échéant des charges pigments, agents de protection contre le vieillissement et catalyseurs caractérisé en ce que les prépolymères d'hydroxy(méth)acrylate présentent un poids moléculaire compris entre environ 1.000 et 15.000, contiennent en substance des groupes hydroxyles en position $\alpha,\omega$ pour un équivalent hydroxy d'environ 500 à 5.000 et ont une fonctionnalité comprise entre 2,0 et 3,0, en ce que le rapport pondéral des polyéther polyols aux hydroxy(méth)acrylates est de 3:1 à 1:3 et en ce que les polyester polyols qui ont un poids moléculaire de 300 à 15.000, présentent des ramifications et correspondent soit à la formule générale I

$$HO-[A-O-\overset{O}{\overset{\|}{C}}-B-\overset{O}{\overset{\|}{C}}-O]_m-A-OH \qquad I$$

dans laquelle m est un nombre entier de 1 à 40 et A et B signifient un résidu aliphatique bivalent $C_2$-$C_{20}$, contenant le cas échéant un groupe ester ou un atome d'oxygène dans la chaîne un résidu cycloaliphatique $C_6$ à $C_{20}$ ou un résidu aromatique $C_6$ à $C_{16}$, les résidus A et/ou B présentant à chaque fois au moins deux groupes latéraux aliphatiques $C_1$ à $C_5$ ou bien A indique l'arête de l'huile de ricin et B est une liaison C-C ou bien un groupe méthylène ou bien l'arête d'un acide gras dimère ou trimère,

ou bien sont un polymérisat par greffe de (méth)acrylates ou de composés vinyliques sur un polyester polyol linéaire de la formule II

$$HO[E - O - \overset{O}{\overset{\|}{C}} - D - \overset{O}{\overset{\|}{C}} - O-]_n - E - OH \qquad II$$

où n est un nombre entier de 1 à 40 et D et E signifient des résidus aliphatiques $C_2$ à $C_{20}$ à chaîne droite, contenant le cas échéant des atomes d'hydrogène dans la chaîne, ou bien D représente une liaison C-C ou bien un résidu de méthylène.

2. Agent d'étanchéité et adhésif selon la revendication 1 caractérisé en ce que les prépolymères d'isocyanate sont produits séparément par conversion du polyester polyol du polyéther polyol et du prépolymère de (méth)acrylate hydroxyfonctionnel avec un di et/ou polyisocyanate puis sont mélangés.

3. Agent d'étanchéité et adhésif selon la revendication 1, caractérisé en ce que les prépolymères d' isocyanate sont produits par la conversion d'un mélange de polyols formé de polyester polyol , polyéther polyol et prépolymère de (méth)acrylate hydroxyfonctionnel avec du di- et/ou polyisocyanate en excès.

4. Agent d'étanchéité et adhésif selon l'une quelconque des revendications 1 à 3, caractérisé en ce que les prépolymères de (méth)acrylate hydroxyfonctionnel sont produits en présence d'un polyester polyol de la formule II avec greffe simultanée des groupes latéraux sur le polyester polyol.

5. Agent d'étanchéité et adhésif selon l'une quelconque des revendications 1 à 4 caractérisé en ce que le polyester polyol présente un poids moléculaire de 500 à 5.000.

6. Agent d'étanchéité et adhésif selon l'une quelconque des revendications 1 à 5 caractérisé en ce que la proportion de prépolymères d'isocyanates chélatés à base du polyester polyol ramifié se rapportant au mélange total des prépolymères d'isocyanate est de 2 à 80% en poids.

7. Agent d'étanchéité et adhésif selon la revendication 3 caractérisé en ce que la proportion du polyester polyol ramifié dans le composant de polyol est de 2 à 80% en poids.